**Europäisches Patentamt**

**European Patent Office**

**Office européen des brevets**

(19)

(11) Veröffentlichungsnummer: **0 171 655**
**B1**

(12) # EUROPÄISCHE PATENTSCHRIFT

(45) Veröffentlichungstag der Patentschrift:
**01.06.88**

(51) Int. Cl.⁴: **B 32 B 25/08**, B 32 B 27/32,
B 32 B 25/14, B 32 B 5/18

(21) Anmeldenummer: **85109127.2**

(22) Anmeldetag: **22.07.85**

(54) Schaumlaminatfolie oder -bahn.

(30) Priorität: **10.08.84 DE 3429523**

(43) Veröffentlichungstag der Anmeldung:
**19.02.86 Patentblatt 86/8**

(45) Bekanntmachung des Hinweises auf die Patenterteilung:
**01.06.88 Patentblatt 88/22**

(84) Benannte Vertragsstaaten:
**AT BE CH DE FR GB IT LI LU NL SE**

(56) Entgegenhaltungen:
**DE - A - 2 721 532**

(73) Patentinhaber: **Alkor GmbH Kunststoffe,
Morgensternstrasse 9 Postfach 71 0109,
D-8000 München 71 (DE)**

(72) Erfinder: **Fink, Roland, Dipl.-Ing., Anwänden 3,
D-8026 Ebenhausen (DE)**
Erfinder: **Mayr, Maximilian, Frank-Caro-Strasse 63,
D-8268 Garching (DE)**
Erfinder: **Schlenz, Dieter, Schanzenstrasse 10,
D-8195 Egling 1 (DE)**

(74) Vertreter: **Seiier, Siegfried, c/o DEUTSCHE
SOLVAY-WERKE GmbH
Langhansstrasse 6 Postfach 11 02 70,
D-5650 Solingen 11 (DE)**

Beschreibung

Die vorliegende Erfindung betrifft eine Schaumlaminatfolie oder -bahn, bestehend aus einer Polyolefinschaumfolie oder -schicht (als Unterfolie), einer ungeschäumten Oberfolie oder ungeschäumten Oberflächenschicht, die ein Gemisch bzw. eine Legierung eines elastomergepfropften Styrol-Acrylnitril-Copolymerisats (ASA) im bestimmten Gewichtsverhältnis enthält, sowie aus einer zwischen Polyolefinschaumfolie oder -schicht und Oberfolie oder Oberflächenschicht angeordneten Zwischenfolie oder Zwischenschicht, die unter Mitverwendung einer Mischung bzw. Legierung aus mindestens einem Niederdruckpolyethylen und einem Ethylen-Vinylesterco- oder -terpolymerisat hergestellt ist.

Aus der DE-A-2 721 532 ist bereits ein Verfahren zur Herstellung von Schaumstoff-Verbundfolien bekannt, wobei man eine ungeschäumte Kunststoffschicht (B), bestehend aus einer 20 μm - 5 mm dicken Schicht auf eine Schaumkunststoffschicht (A), bestehend aus einer 1 - 120 mm dicken Schaumstoffbahn, aus einem Ethylenhomo- oder -copolymerisat mit einer Dichte zwischen 10 g/l und 200 g/l aufbringt und die Schichten unter Anwendung eines Pressdrucks oder die Schichten (A) und (B) unter Mitverwendung einer mit der ungeschäumten Kunststoffschicht (B) coextrudierten Haftvermittlerschicht miteinander verbindet. Als Kunststoffe für die ungeschäumte Schicht (B) werden Ethylenpolymerisate eingesetzt. Andere brauchbare Kunststoffe sind Styrolpolymerisate, wie z.B. Polystyrol, Copolymerisate des Styrols mit üblichen Comonomeren, wie Acrylnitril, Acrylestern oder Maleinsäureanhydrid, die gegebenenfalls durch Kautschuke auf der Basis von Butadien- oder Acrylester-Polymerisaten modifiziert sein können; ferner Homo- oder Copolymerisate des Propylens, Methylmethacrylats, Vinylchlorids oder Vinylidenchlorids. Auch thermoplastische Polykondensate und Polyaddukte sind verwendbar, wie z.B. Polyamide, lineare Polyester, Polyacetate oder Polycarbonate.

Schaumlaminatfolien, hergestellt nach dem Verfahren der DE-OS 2 721 532, bestehend aus einem Polyethylenschaum, einer ungeschäumten Schicht bzw. Folie aus Styrolacrylnitril-Copolymerisat und einer Zwischenschicht aus Polyvinylacetat, weisen jedoch das Risiko der Delaminierung bei höheren Temperaturen auf und besitzen somit eine für viele Anwendungen unzureichende Haftung der einzelnen Schichten miteinander.

Dies lässt sich besonders bei den Wärmealterungstests der Formteile während 6 - 36 Std. bei 120°C dadurch erkennen, dass sich die Oberfolie durch Schrumpfungserscheinungen von dem Polyethylenschaum trennt. Da die Haftvermittlerschichten meist niedrigere physikalische Eigenschaften als die Oberflächenfolie und der PE-Schaum besitzen, beeinflussen sie das Eigenschaftsbild des Verbundes nachteilig, wenn sie als dickere Schicht eingesetzt werden.

Ziel und Aufgabe der vorliegenden Erfindung war es daher, diese Nachteile zu vermeiden und eine Schaumlaminatfolie oder -bahn mit verbesserten Eigenschaften zu finden. Diese Schaumlaminatfolie oder -bahn sollte insbesondere die besonderen Eigenschaften von Styrol-Polymeren, insbesondere deren gute Thermoformbarkeit, Narbstabilität und das angenehme Griffgefühl mit den typischen Eigenschaften der Polyolefine kombinieren, ohne dass die Gefahr der Delaminierung oder eine Verschlechterung des Verformungsverhaltens eintritt.

Erfindungsgemäss wurde festgestellt, dass diesen Zielen und Aufgaben eine Schaumlaminatfolie oder -bahn gerecht wird, bei der die, ein elastomergepfropftes Styrol-Acrylnitrol-Copolymerisat (ASA) enthaltende Oberfolie oder Oberflächenschicht aus einem Gemisch bzw. einer Legierung aus einem elastomergepfropften Styrol-Acrylnitril-Copolymerisat (ASA), das mit polyfunktionellen, vorzugsweise difunktionellen Acrylaten gepfropft ist und einem chlorierten Polyethylen (PEC) und/oder einem kautschukartigen Ethylen-Propylen-Mischpolymerisat (EPM) und/oder einem kautschukartigen Terpolymerisat aus Ethylen, Propylen und einem Dien, vorzugsweise einem nichtkonjugierten Dien (EPDM), zusammengesetzt ist, wobei die Gewichtsverhältnisse von 1.1 (ASA) zu 1.2 (PEC) und/oder 1.3 (EPM) und/oder 1.4 (EPDM) 8 : 2 bis 3 : 7, vorzugsweise 6 : 4 bis 4 : 6 betragen. Die Polyolefinschaumfolie oder -schicht (Unterfolie) besteht aus einem geschlossenporigen Polyethylenschaum und/oder geschlossenporigen Ethylen-Propylen-Copolymerisatschaum bzw. Mischungen dieser Kunststoffe mit einem Raumgewicht von 30 bis 700 kg/m$^3$, vorzugsweise 35 bis 500 kg/m$^3$, und die Zwischenfolie oder die Zwischenschicht aus einer Mischung bzw. Legierung aus einer polare Gruppen enthaltenden Mischung oder Legierung aus einem Niederdruckpolyethylen mit einem polare Gruppen enthaltenden Ethylen-Vinylester-Copolymerisat, vorzugsweise einem mit Ethylen-Vinylacetat modifizierten Niederdruckpolyethylen (HDPE) und einem kautschukartigen Ethylen-Propylen-Mischpolymerisat (EPM) und/oder einem kautschukartigen Terpolymerisat aus Ethylen, Propylen und einem Dien (EPDM).

Die erfindungsgemässe Schaumlaminatfolie oder -bahn weist eine gute Thermoformbarkeit, eine geringe Veränderung der Prägung durch das Erwärmen auf Verformungstemperatur, geringe Verhärtung des Laminates bei der Verformung, ein gutes Alterungsverhalten, keine Delaminierung bei der Verarbeitung und Anwendung und andere Verarbeitungsvorteile bzw. verbesserte Produkteigenschaften auf.

Die Zwischenfolie ist gemäss der Erfindung in ihrer Wärmeformbeständigkeit, ihren mechanischen Eigenschaften und der Tiefziehfähigkeit an die Oberfolie angepasst. Hierdurch lassen sich die typischen Eigenschaften der Styrolpolymeren mit denen der Polyolefine vorteilhaft kombinieren. Als besondere Eigenschaften der Styrolpolymeren sind die gute Thermoformbarkeit, die Narbstabilität und das angenehme Griffgefühl zu nennen. Die modifizierten Polyolefine verbessern besonders die Eigenschaften bei niederen Temperaturen.

Da die mechanischen Eigenschaften der Zwischenfolie an die der Oberflächenfolie angeglichen sind, kann das Dickenverhältnis in weiten Grenzen variiert werden.

Das Dickenverhältnis zwischen Oberfolie oder Oberflächenschicht und Zwischenschicht beträgt jedoch zweckmässig 4 : 1 bis 1 : 4, vorzugsweise 3 : 1 bis 1 : 3.

Nach einer vorteilhaften Ausführungsform beträgt in der Oberfolie oder Oberflächenschicht das Gewichtsverhältnis von chloriertem Polyethylen (PEC) zu dem kautschukartigen Terpolymerisat aus Ethylen, Propylen und Dien (EPDM) und/oder zu dem kautschukartigen Ethylen-Propylen-Mischpolymerisat (EPM) 1 : 3 bis 3 : 1, vorzugsweise 1 : 2 bis 2 : 1.

In der Zwischenschicht beträgt der Vinylestergehalt (bezogen auf die gesamte Kunststoffmischung bzw. -legierung der Zwischenschicht), vorzugsweise der Vinylacetatgehalt (oder Gehalt an Vinylacetateinheiten) 5 - 20 Gew.-Teile, vorzugsweise 6 - 18 Gew.-Teile (bezogen auf 100 Gew.-Teile der Kunststoffmischung bzw. -legierung der Zwischenschicht und berechnet ohne Verarbeitungshilfsmittel, Füllstoffe oder Zusatzmittel). Durch die Verwendung dieser Zusammensetzung gelingt es u.a. die Gefahr der Delaminierung zu verringern bzw. zu verhindern.

Nach einer bevorzugten Ausführungsform beträgt der Gehalt an EPM und/oder EPDM in der Zwischenschicht 6 - 27 Gew.-Teile, vorzugsweise 7 - 24 Gew.-Teile (bezogen auf 100 Gew.-Teile der Kunststoffmischung bzw. -legierung der Zwischenschicht und berechnet ohne Verarbeitungshilfsmittel, Füllstoffe oder Zusatzmittel). Bei dieser Zusammensetzung der Schaumlaminatfolien werden insbesondere geringe Verhärtungen des Laminates nach der Verformung sowie eine Verringerung der Delaminierungsgefahr und dgl. erzielt.

Das für die Zwischenschicht verwendete polare Gruppen enthaltende Ethylen-Vinylester-Copolymerisat, vorzugsweise Ethylen-Vinylacetat-Copolymerisat besitzt einen Vinylestergehalt, vorzugsweise Vinylacetatgehalt (Gehalt an Vinylacetateinheiten) von 9 - 40 Gew.-%, vorzugsweise 12 - 30 Gew.-%.

Das nach einer Ausführungsform in der Oberfolie oder Oberflächenschicht enthaltene chlorierte Polyethylen (PEC) besitzt vorzugsweise einen Chlorgehalt von 36 - 46 Gew.-%.

Die Oberfläche oder Oberflächenschicht enthält nach einer anderen Ausführungsform 0,5 - 5 Gew.-%, vorzugsweise 2 - 4 Gew.-% (bezogen auf 100 Gew.-% der Kunststoffmischung der Oberfolie) eines Polycaprolactons.

Der geschlossenporige Polyethylenschaum und/oder geschlossenporige Ethylen-Propylen-Copolymerisatschaum bzw. geschlossenporige Schaum aus Mischungen dieser Kunststoffe ist unvernetzt und weist ein Raumgewicht von 300 - 700 kg/m³, vorzugsweise 320 - 500 kg/m³, auf.

Nach einer anderen Ausführungsform hat der nach einem an sich bekannten physikalischen und/oder chemischen Verfahren vernetzte, geschlossenporige Polyethylenschaum und/oder vernetzte, geschlossenporige Ethylen-Propylen-Copolymerisatschaum ein Raumgewicht von 30 - 300 kg/m³, vorzugsweise 35 - 280 kg/m³.

Die Zwischenfolie der Zwischenschicht und die Oberfolie oder Oberflächenschicht weisen eine Gesamtdicke von 0,2 - 1,5 mm, vorzugsweise 0,3 - 0,8 mm, auf.

Das eingesetzte polare Gruppen enthaltende Ethylen-Vinylacetat-Copolymerisat besitzt einen Schmelzindex Mfi 190/2,16 von 1 - 10 g/10 min.

Die Erfindung betrifft weiterhin ein Verfahren zur Herstellung von Schaumlaminatfolien oder -bahnen, wobei die Oberfolie oder Oberflächenschicht, bestehend aus einem Gemisch bzw. einer Legierung aus einem elastomergepfropften Styrol-Acrylnitril-Copolymerisat (ASA), das mit polyfunktionellen, vorzugsweise difunktionellen Acrylaten gepfropft ist und einem chlorierten Polyethylen (PEC) und/oder einem kautschukartigen Ethylen-Propylen-Mischpolymerisat (EPM) und/oder einem kautschukartigen Terpolymerisat aus Ethylen, Propylen und einem Dien, vorzugsweise einem nichtkonjugierten Dien (EPDM), die Polyolefinschaumfolie oder -schicht (Unterfolie), bestehend aus einem geschlossenporigen Polyethylenschaum und/oder Ethylen-Propylen-Copolymerisatschaum oder Mischungen bzw. Legierungen dieser Kunststoffe mit einem Raumgewicht von 30 bis 700 kg/m³, vorzugsweise 35 bis 500 kg/m³, die Zwischenfolie oder Zwischenschicht bestehend aus einer Mischung bzw. Legierung aus einer polare Gruppen enthaltenden Mischung aus einem Niederdruckpolyethylen mit einem polare Gruppen enthaltenden Ethylen-Vinylester-Copolymerisat, vorzugsweise einem ethylen-vinylacetatmodifizierten Niederdruckpolyethylen (HDPE) und einem kautschukartigen Ethylen-Propylen-Mischpolymerisat (EPM) und/oder einem kautschukartigen Terpolymerisat aus Ethylen, Propylen und einem Dien (EPDM), ohne Verwendung von zusätzlichen Klebstoffen durch Verpressen in an sich bekannten Press- oder Walzvorrichtungen und/oder unter Verwendung eines Coextrusionsverfahrens unter Hitzeanwendung vereinigt bzw. verbunden werden.

Die aus einer Breitschlitzdüse austretende Oberschicht und Zwischenschicht werden dabei ohne Verwendung zusätzlicher Klebstoffe bei einer Massetemperatur von 180 bis 260°C, vorzugsweise 200 bis 240°C, mit einer Polyolefinschaumfolie oder -bahn und einem Liniendruck von 2 bis 50 kp/cm unter Verwendung mindestens eines Walzenpaares, vorzugsweise unter Verwendung einer Prägewalze oder unter Verwendung einer Presse, vereinigt.

Nach einer anderen Ausführungsform werden die Oberfolien und/oder Unterfolien und/oder Zwischenfolien getrennt und/oder als zweischichtige Folien hergestellt und unter Verwendung einer Presse oder mindestens eines Walzenpaares mit den anderen Folien oder der dritten Folie bei einer Zwischentemperatur von 130 - 240°C, vorzugsweise 140 - 190°C, durch Pressen ohne Verwendung zusätzlicher Klebstoffe verbunden werden.

Nach einer anderen bevorzugten Ausführungsform werden die Oberschicht, Unterschicht und Zwischenschicht im Coextrusionsverfahren bei Massetemperaturen von 180 - 260°C, vorzugsweise 200 bis 240°C, verarbeitet und unter Verwendung einer Breitschlitzdüse hergestellt.

Die erfindungsgemässen Schaumlaminatfolien oder -bahnen können als solche unmittelbar eingesetzt werden oder auch einem Weiterbearbeitungs- oder Verarbeitungsverfahren, z.B. einer Thermoverformung, einem Tiefziehverfahren oder einer Prägung und/oder einer Hinterschäumung und dgl., unterworfen werden.

Die erfindungsgemässen Folien sind in ihrer Wärmeformbeständigkeit, ihren mechanischen Eigenschaften und der Tiefziehfähigkeit an die Oberfolie angepasst. Hierdurch lassen sich die typischen Eigenschaften der Styrolpolymeren mit denen der Polyolefine vorteilhaft kombinieren. Als besondere Eigenschaft der Styrolpolymeren sind die gute Thermoformbarkeit, die Narbstabilität und das angenehme Griffgefühl zu nennen. Die modifizierten Polyolefine verbessern besonders die Eigenschaften bei niedrigen Temperaturen.

*Vergleichsbeispiel 1*

Die 300 μm dicke Oberfolie bei diesem, nicht zum Stand der Technik gehörenden Vergleichsbeispiel aus einer Mischung von

65 Gew.-Teilen eines acrylatgepfropften Styrol-Acrylnitril-Copolymerisats (ASA) — Acrylatanteil ca. 40 Gew.-%

25 Gew.-Teilen PEC — Chlorgehalt 42%
10 Gew.-Teilen EPDM — Ethylenanteil 70%,
die durch Kalandrieren bei 180°C hergestellt wurde.

Die Zwischenschicht bestand aus HD-PE Mfi 190/2,16 von 1 g/10 min, einem Ethylen-Vinylacetat-Copolymeren mit einem Anteil von 28% VAC und einem Mfi 190/2,16 von 3 g/10 min, in dem Mischungsverhältnis entsprechend nachfolgender Tabelle. Die Mischungen wurden bei 180°C zu 200 μm dicken Folien extrudiert.

Die Unterschicht bestand aus einem vernetzten HD-PE-Schaum mit einem Raumgewicht von 35 kg/m³.

Die 3 Schichten wurden in einer Presse bei 170°C während 2 min mit einem Druck von 4,9 bar (5 kg/cm²) verpresst.

Die nachfolgenden Werte wurden nach den entsprechenden DIN-Prüfverfahren ermittelt.

| Mischungsverh. HDPE/EVA<br>Phys. Eigensch. | 9 : 1 | 8 : 2 | 7 : 3 | 6 : 4 | 4 : 6 |
|---|---|---|---|---|---|
| Reissfestigkeit längs (N/mm²) | 21,5 | 17 | 15,5 | 15 | 13 |
| Reissfestigkeit quer (N/mm²) | 21 | 16 | 15 | 15 | 14 |
| Bruchdehnung längs (%) | 170 | 130 | 125 | 205 | 440 |
| Bruchdehnung quer (%) | 260 | 105 | 140 | 185 | 360 |
| Härte Shore D | 64 | 60 | 57 | 55 | 53 |
| VSP (A) °C | 132 | 115 | 112 | 89 | 77 |
| Haftung (N/5 cm) | 5,9 | 12,5 | 27 | >30 | >30 untrennbar |
| VAC-Gehalt (Gew.-%) | 2,8 | 5,6 | 8,4 | 12,2 | 16,8 |

Die Zugfestigkeitsprüfungen zeigen eine begrenzte Verträglichkeit der beiden Polymeren, da die Reissfestigkeit mit zunehmendem EVA-Anteil abnimmt und die Dehnung nicht verbessert wird. Die Vakuumverformung des Laminates ist nicht ausreichend, da bei Temperaturen oberhalb 120°C die Zwischenschicht aufreisst, ohne dass die Oberfolie einwandfrei verformt ist. Die Haftung bei diesen Kombinationen ist erst ab einem VAC-Anteil von 12 Gew.-% ausreichend.

*Beispiel 1*

In der Zwischenschicht entsprechend Vergleichsbeispiel 1 wurde die HD-PE teilweise durch EPDM gemäss der Erfindung eingesetzt und ansonsten entsprechend Beispiel 1 vorgegangen. Die Ergebnisse sind in nachfolgender Tabelle dargestellt.

| Mischungsverh. HDPE/EPDM/EVA<br>Phys. Eigensch. | 6,3:2,7:1 | 5,6:2,4:2 | 4,9:2,1:3 | 4,2:1,8:4 | 2,8:1,2:6 |
|---|---|---|---|---|---|
| Reissfestigkeit längs (N/mm²) | 19,5 | 19,2 | 18,5 | 18 | 18,3 |
| Reissfestigkeit quer (N/mm²) | 19,2 | 19 | 18 | 17,8 | 18 |
| Bruchdehnung längs (%) | 870 | 860 | 830 | 845 | 855 |
| Bruchdehnung quer (%) | 820 | 865 | 840 | 820 | 830 |
| Härte Shore D | 52 | 50 | 47 | 43 | 40 |
| VSP (A) °C | 110 | 95 | 82 | 77 | 73 |

| Mischungsverh. HDPE/EPDM/EVA | 6,3:2,7:1 | 5,6:2,4:2 | 4,9:2,1:3 | 4,2:1,8:4 | 2,8:1,2:6 |
|---|---|---|---|---|---|
| **Phys. Eigensch.** | | | | | |
| Haftung (N/5 cm) | 7,5 | 3,8 | untrennbar | untrennbar | untrennbar |
| VAC-Gehalt (Gew.-%) | 2,8 | 5,6 | 8,4 | 12,2 | 16,8 |

Die Ergebnisse der Zugfestigkeitsprüfung zeigen, dass die Prüfwerte vom Mischungsverhältnis unabhängig sind und somit eine «praktische» Verträglichkeit vorliegt. Ausserdem werden die geforderten Haftungseigenschaften schon bei einem VAC-Gehalt von 8,4% erreicht. Die Tiefziehprüfungen ergaben, dass in einem Bereich von 120 bis 160°C verformt werden kann und damit eine einwandfreie Kontur erreicht wird.

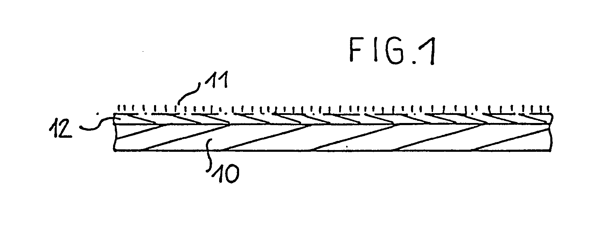

In der beigefügten Figur 1 ist ein Ausführungsbeispiel der Schaumlaminatfolie schematisch dargestellt. Unter (11) ist die Oberfolie abgebildet, die über die Zwischenschicht (12) mit der Polyolefinschaumfolie oder -schicht (10) (als Unterschicht oder Unterfolie) in Verbindung steht.

**Patentansprüche**

1. Schaumlaminatfolie oder -bahn, bestehend aus

1. einer ungeschäumten Oberfolie oder ungeschäumten Oberflächenschicht, die ein elastomergepfropftes Styrol-Acrylnitril-Copolymerisat (ASA) enthält und eine Dicke von mehr als 20 μm aufweist,

2. einer Polyolefinschaumfolie oder -schicht mit einer Dichte von mehr als 10 kg/m³ (als Unterfolie), aus oder unter Mitverwendung eines Ethylenhomo- oder -copolymerisates,

3. einer zwischen Olefinschaumfolie oder -schicht und Oberfolie oder Oberflächenschicht angeordneten, haftvermittelnden Zwischenfolie oder Zwischenschicht auf der Basis von Niederdruck-Polyethylen unter Mitverwendung eines Ethylen-Vinylester-Copolymerisates,

dadurch gekennzeichnet, dass die, ein elastomergepfropftes Styrol-Acrylnitril-Copolymerisat (ASA) enthaltende Oberfolie oder Oberflächenschicht aus einem Gemisch bzw. einer Legierung

1.1 aus einem elastomergepfropften Styrol-Acrylnitril-Copolymerisat (ASA), das mit polyfunktionellen, vorzugsweise difunktionellen Acrylaten gepfropft ist, und

1.2 einem chlorierten Polyethylen (PEC) und/oder

1.3 einem kautschukartigen Ethylen-Propylen-Mischpolymerisat (EPM) und/oder

1.4 einem kautschukartigen Terpolymerisat aus Ethylen, Propylen und einem Dien, vorzugsweise einem nichtkonjugierten Dien (EPDM), zusammengesetzt ist, wobei die Gewichtsverhältnisse von 1.1 (ASA) zu 1.2 (PEC) und/oder 1.3 (EPM) und/oder 1.4 (EPDM) 8 : 2 bis 3 : 7, vorzugsweise 6 : 4 bis 4 : 6 betragen, dass die Polyolefinschaumfolie oder -schicht (Unterfolie)

2.1 aus einem geschlossenporigen Polyethylen-schaum und/oder geschlossenporigen Ethylen-Propylen-Copolymerisatschaum bzw. Mischungen dieser Kunststoffe mit einem Raumgewicht von 30 bis 700 kg/m³, vorzugsweise 35 bis 500 kg/m³, und die Zwischenfolie oder die Zwischenschicht aus einer Mischung bzw. Legierung aus

3.1 einer polare Gruppen enthaltenden Mischung oder Legierung aus einem Niederdruckpolyethylen mit einem polare Gruppen enthaltenden Ethylen-Vinylester-Copolymerisat, vorzugsweise einem mit Ethylen-Vinylacetet modifizierten Niederdruckpolyethylen (HDPE) und

3.2 einem kautschukartigen Ethylen-Propylen-Mischpolymerisat (EMP) und/oder einem kautschukartigen Terpolymerisat aus Ethylen, Propylen und einem Dien (EPDM) besteht.

2. Schaumlaminatfolie oder -bahn nach Anspruch 1, dadurch gekennzeichnet, dass das Dickenverhältnis zwischen Oberfolie oder Oberflachenschicht und Zwischenschicht 4 : 1 bis 1 : 4, vorzugsweise 3 : 1 bis 1 : 3, beträgt,

3. Schaumlaminatfolie oder -bahn nach Anspruch 1, dadurch gekennzeichnet, dass in der Oberfolie oder Oberflächenschicht das Gewichtsverhältnis von chloriertem Polyethylen (PEC) zu dem kautschukartigen Terpolymerisat aus Ethylen, Propylen und einem Dien (EPDM) und/oder zu dem kautschukartigen Ethylen-Propylen-Mischpolymerisat (EPM) 1 : 3 bis 3 : 1, vorzugsweise 1 : 2 bis 2 : 1, beträgt.

4. Schaumlaminatfolie oder -bahn nach einem oder mehreren der Ansprüche 1 bis 3, dadurch gekennzeichnet, dass in der Zwischenschicht 3.1 der Vinylestergehalt (bezogen auf die gesamte Kunststoffmischung bzw. -legierung der Zwischenschicht), vorzugsweise der Vinylacetatgehalt (oder Gehalt an Vinylacetateinheiten) 5 - 20 Gew.-Teile, vorzugsweise 6 - 18 Gew.-Teile, beträgt (bezogen auf 100 Gew.-Teile der Kunststoffmischung bzw. -legierung der Zwischenschicht und berechnet ohne Verarbeitungshilfsmittel, Füllstoffe oder Zusatzmittel).

5. Schaumlaminatfolie oder -bahn nach einem oder mehreren der Ansprüche 1 bis 4, dadurch gekennzeichnet, dass der Gehalt an EPM und/oder EPDM in der Zwischenschicht 6 - 27 Gew.-Teile, vorzugsweise 7 - 24 Gew.-Teile (bezogen auf 100 Gew.-Teile der Kunststoffmischung bzw. -legierung der Zwischenschicht und berechnet ohne Verarbeitungshilfsmittel, Füllstoffe oder Zusatzmittel) beträgt.

6. Schaumlaminatfolie oder -bahn nach einem oder mehreren der Ansprüche 1 bis 5, dadurch gekennzeichnet, dass das für die Zwischenschicht verwendete polare Gruppen enthaltende Ethylen-Vinylester-Copolymerisat, vorzugsweise Ethylen-Vinylacetat-Copolymerisat einen Vinylestergehalt, vorzugsweise Vinylacetatgehalt (Gehalt an Vinylacetateinheiten) von 9 - 40 Gew.-%, vorzugsweise 12 - 30 Gew.-%, besitzt.

7. Schaumlaminatfolie oder -bahn nach einem oder mehreren der Ansprüche 1 bis 6, dadurch gekennzeichnet, dass das verwendete chlorierte Polyethylen (PEC) einen Chlorgehalt von 36 - 46 Gew.-% besitzt.

8. Schaumlaminatfolie oder -bahn nach einem oder mehreren der Ansprüche 1 bis 7, dadurch gekennzeichnet, dass die Oberfolie oder Oberflächenschicht

1.5 0,5 - 5 Gew.-%, vorzugsweise 2 - 4 Gew.-% (bezogen auf 100 Gew,-% der Kunststoffmischung der Oberfolie) eines Polycaprolactons enthält.

9. Schaumlaminatfolie oder -bahn nach einem oder mehreren der Ansprüche 1 bis 8, dadurch gekennzeichnet, dass der geschlossenporige Polyethylenschaum und/oder geschlossenporige Ethylen-Propylen-Copolymerisatschaum bzw. geschlossenporige Schaum aus Mischungen dieser Kunststoffe unvernetzt ist und ein Raumgewicht von 300 - 700 kg/m$^3$, vorzugsweise 320 - 500 kg/m$^3$, aufweist.

10. Schaumlaminatfolie oder -bahn nach einem oder mehreren der Ansprüche 1 bis 9, dadurch gekennzeichnet, dass der nach einem an sich bekannten physikalischen und/oder chemischen Verfahren vernetzte, geschlossenporige Polyethylenschaum und/oder vernetzte, geschlossenporige Ethylen-Propylen-Copolymerisatschaum ein Raumgewicht von 30 - 300 kg/m$^3$, vorzugsweise 35 - 280 kg/m$^3$, aufweist.

11. Schaumlaminatfolie oder -bahn nach einem oder mehreren der Ansprüche 1 bis 10, dadurch gekennzeichnet, dass die Zwischenfolie oder Zwischenschicht und die Oberfolie oder Oberflächenschicht eine Gesamtdicke von 0,2 - 1,5 mm, vorzugsweise 0,3 - 0,8 mm, aufweisen.

12. Schaumlaminatfolie oder -bahn nach einem oder mehreren der Ansprüche 1 bis 11, dadurch gekennzeichnet, dass das eingesetzte polare Gruppen enthaltende Ethylen-Vinylacetat-Copolymerisat ein Mfi 190/2,16 von 1 - 10 g/10 min besitzt.

13. Verfahren zur Herstellung von Schaumlaminatfolien oder -bahnen nach einem oder mehreren der Ansprüche 1 bis 12, dadurch gekennzeichnet, dass die

1. Oberfolie oder Oberflächenschicht, bestehend aus einem Gemisch bzw. einer Legierung

1.1 aus einem elastomergepfropften Styrol-Acrylnitril-Copolymerisat (ASA), das mit polyfunktionellen, vorzugsweise difunktionellen Acrylaten gepfropft ist und

1.2 einem chlorierten Polyethylen (PEC) und/oder

1.3 einem kautschukartigen Ethylen-Propylen-Mischpolymerisat (EPM) und/oder

1.4 einem kautschukartigen Terpolymerisat aus Ethylen, Propylen und einem Dien, vorzugsweise einem nichtkonjugierten Dien (EPDM),

2. die Polyolefinschaumfolie oder -schicht (Unterfolie), bestehend aus

2.1 einem geschlossenporigen Polyethylenschaum und/oder Ethylen-Propylen-Copolymerisatschaum oder Mischungen bzw. Legierungen dieser Kunststoffe mit einem Raumgewicht von 30 bis 700 kg/m$^3$, vorzugsweise 35 bis 500 kg/m$^3$,

3. die Zwischenfolie oder Zwischenschicht bestehend aus einer Mischung bzw. Legierung aus

3.1 einer polare Gruppen enthaltenden Mischung aus einem Niederdruckpolyethylen mit einem polare Gruppen enthaltenden Ethylen-Vinylester-Copolymerisat, vorzugsweise einem Ethylen-Vinylacetat-modifizierten Niederdruckpolyethylen (HDPE) und

3.2 einem kautschukartigen Ethylen-Propylen-Mischpolymerisat (EPM) und/oder einem kautschukartigen Terpolymerisat aus Ethylen, Propylen und einem Dien (EPDM),

ohne Verwendung von zusätzlichen Klebstoffen durch Verpressen in an sich bekannten Press- oder Walzvorrichtungen und/oder unter Verwendung eines Coextrusionsverfahrens unter Hitzeanwendung vereinigt bzw. verbunden werden.

14. Verfahren nach Anspruch 13, dadurch gekennzeichnet, dass die aus einer Breitschlitzdüse austretende Oberschicht und Zwischenschicht ohne Verwendung zusätzlicher Klebstoffe bei einer Massetemperatur von 180 bis 260°C, vorzugsweise 200 bis 240°C, mit einer Polyolefinschaumfolie oder -bahn und einem Liniendruck von 2 bis 50 kp/cm unter Verwendung mindestens eines Walzenpaares, vorzugsweise unter Verwendung einer Prägewalze oder unter Verwendung einer Presse, vereinigt werden.

15. Verfahren nach Anspruch 14, dadurch gekennzeichnet, dass die Oberfolien und/oder Unterfolien und/oder Zwischenfolien getrennt und/oder als zweischichtige Folien hergestellt und unter Verwendung einer Presse oder mindestens eines Walzenpaares mit den anderen Folien oder der dritten Folie bei einer Zwischentemperatur von 130 - 240°C, vorzugsweise 140 - 190°C, durch Pressen ohne Verwendung zusätzlicher Klebstoffe verbunden werden.

16. Verfahren nach Anspruch 15, dadurch gekennzeichnet, dass die Oberschicht, Unterschicht und Zwischenschicht im Coextrusionsverfahren bei Massetemperaturen von 180 - 260°C, vorzugsweise 200 - 240°C, verarbeitet und unter Verwendung einer Breitschlitzdüse hergestellt werden.

**Claims**

1. Laminated foam film or web, consisting of

1. an unfoamed top film or unfoamed surface layer which contains an elastomer styrene-acrylonitrile graft copolymer (ASA) and has a thickness of more than 20 µm,

2. a polyolefin foam film or layer with a densinty of more than 10 kg/m$^3$ (as bottom film), made from or with the use of an ethylene homo- or copolymer,

3. a bonding intermediate film or intermediate layer arranged between olefin foam film or layer and top film or surface layer based on low pressure polyethylene with the use of an ethylene/vinyl ester copolymer,

characterised in that the top film or surface layer containing an elastomeric styrene-acrylonitrile graft copolymer (ASA) is composed of a mixture or an alloy

1.1 of an elastomeric styrene-acrylonitrile graft copolymer (ASA) which is grafted with multifunctional, preferably bifunctional acrylates, and

1.2 a chlorinated polyethylene (PEC) and/or

1.3 a rubber-like ethylene/propylene mixed polymer (EPM) and/or

1.4 a rubber-like terpolymer of ethylene, propylene and a diene, preferably a non-conjugated diene (EPDM),

the ratios of weight of 1.1 (ASA) to 1.2 (PEC) and/or 1.3 (EPM) and/or 1.4 (EPDM) being 8 : 2 to 3 : 7, preferably 6 : 4 to 4 : 6, in that the polyolefin foam film or layer (bottom film)

2.1 consists of a closed pore polyethylene foam and/or closed pore ethylene/propylene copolymer foam or mixtures of these plastics with a density of 30 to 700 kg/m$^3$, preferably 35 to 500 kg/m$^3$, and the intermediate film or the intermediate layer consists of a mixture or alloy of

3.1 a mixture or alloy containing polar groups made of a low pressure polyethylene with an ethylene/vinyl ester copolymer containing polar groups, preferably a low pressure polyethylene (HDPE) modified with ethylene-vinyl acetate and

3.2 a rubber-like ethylene/propylene mixed polymer (EPM) and/or a rubber-like terpolymer of ethylene, propylene and a diene (EPDM).

2. Laminated foam film or web according to Claim 1, characterised in that the thickness ratio between top film or surface layer and intermediate layer is 4 : 1 to 1 : 4, preferably 3 : 1 to 1 : 3.

3. Laminated foam film or web according to Claim 1, characterised in that in the top film or surface layer the ratio by weight of chlorinated polyethylene (PEC) to the rubber-like terpolymer of ethylene, propylene and a diene (EPDM) and/or to the rubber-like ethylene/propylene mixed polymer (EPM) is 1 : 3 to 3 : 1, preferably 1 : 2 to 2 : 1.

4. Laminated foam film or web according to one or more of Claims 1 to 3, characterised in that the intermediate layer 3.1 the vinyl ester content (relative to the total plastic mixture or alloy of the intermediate layer), preferably the vinyl acetate content (or content of vinyl acetate units) is 5 - 20 p.b.w., preferably 6 - 18 p.b.w. (relative to 100 p.b.w. of the plastic mixture or alloy of the intermediate layer and calculated without auxiliary processing agents, fillers or additives).

5. Laminated foam film or web according to one or more of Claims 1 to 4, characterised in that the EPM and/or EPDM content in the intermediate layer is 6 - 27 p.b.w., preferably 7 - 24 p.b.w. (relative to 100 p.b.w. of the plastic mixture or alloy of the intermediate layer and calculated without auxiliary processing agents, fillers or additives).

6. Laminated foam film or web according to one or more of Claims 1 to 5, characterised in that the ethylene/vinyl ester copolymer used for the intermediate layer and containing polar groups, preferably ethylene/vinyl acetate copolymer, has a vinyl ester content, preferably vinyl acetate content (content of vinyl acetate units) of 9 - 40 weight per cent, preferably 12 - 30 weight per cent.

7. Laminated foam film or web according to one or more of Claims 1 to 6, characterised in that the chlorinated polyethylene (PEC) used has a chlorine content of 36 - 46 weight per cent.

8. Laminated foam film or web according to one or more of Claims 1 to 7, characterised in that the top film or surface layer

1.5 contains 0.5 - 5 weight per cent, preferably 2 - 4 weight per cent (relative to 100 weight per cent of the plastic mixture of the top film) of a polycaprolactone.

9. Laminated foam film or web according to one or more of Claims 1 to 8, characterised in that the closed pore polyethylene foam and/or closed pore ethylene/propylene copolymer or closed pore foam made of mixtures of these plastics is not cross-linked and has a density of 300 - 700 kg/m$^3$, preferably 320 - 500 kg/m$^3$.

10. Laminated foam film or web according to one or more of Claims 1 to 9, characterised in that the closed pore polyethylene foam cross-linked according to a physical or chemical process known in itself and/or cross-linked closed pore ethylene/propylene copolymer has a density of 30 - 300 kg/m$^3$, preferably 35 - 280 kg/m$^3$.

11. Laminated foam film or web according to one or more of Claims 1 to 10, characterised in that the intermediate film or intermediate layer and the top film or surface layer have a total thickness of 0.2 to 1.5 mm, preferably 0.3 - 0.8 mm.

12. Laminated foam film or web according to one or more of Claims 1 to 11, characterised in that the ethylene/vinyl acetate copolymer used, which contains polar groups, has an Mfi 190/2, 16 of 1 - 10 g/10 min.

13. Process for producing laminated foam films or webs according to one or more of Claims 1 to 12, characterised in that the

1. top film or surface layer consisting of a mixture or an alloy

1.1 of an elastomeric styrene-acrylonitrile graft copolymer (ASA) which is grafted with multifunctional preferably bifunctional acrylates and

1.2 a chlorinated polyethylene (PEC) and/or

1.3 a rubber-like ethylene/propylene mixed polymer (EPM) and/or

1.4 a rubber-like terpolymer of ethylene, propylene and a diene, preferably a non-conjugated diene (EPDM),

2. the polyolefin foam film or layer (bottom film), consisting of

2.1 a closed pore polyethylene foam and/or ethylene/propylene copolymer foam or mixtures or alloys of these plastics with a density of 30 to 700 kg/m$^3$, preferably 35 to 500 kg/m$^3$,

3. the intermediate film or intermediate layer consisting of a mixture or alloy of

3.1 a mixture of a low pressure polyethylene containing polar groups with an ethylene/vinyl ester copolymer containing polar groups, preferably an ethylene/vinyl acetate-modified low pressure polyethylene (HDPE) and

3.2 a rubber-like ethylene/propylene mixed polymer (EPM) and/or a rubber-like terpolymer of ethylene, propylene and a diene (EPDM),

are combined or bonded without using additional adhesives by pressing in pressing or rolling devices known in themselves and/or using a coextrusion process with application of heat.

14. Process according to Claim 13, characterised in that the top layer and intermediate layer emerging from a wide slot die are combined without using additional adhesives at a mass temperature of 180 to 260°C, preferably 200 to 240°C, with a polyolefin foam film or web and at a linear pressure of 2 to 50 kp/cm using at least one pair of rollers, preferably using an embossing roller or using a press.

15. Process according to Claim 14, characterised in that the top films and/or bottom films and/or intermediate films are produced separately and/or as two-layer films and are bonded using a press or at least one pair of rollers with the other films or the third film at an intermediate temperature of 130 - 240°C, preferably 140 -190°C, by pressing without using additional adhesives.

16. Process according to Claim 15, characterised in that the top layer, bottom layer and intermediate layer are processed in the coextrusion process at mass temperatures of 180 - 260°C, preferably 200 to 240°C and produced using a wide slot die.

**Revendications**

1. Pellicule ou bande stratifiée de mousse consistant en:

1. une pellicule supérieure non cellulaire ou une couche superficielle non cellulaire qui contient un copolymère styrène-nitrile acrylique (ASA) greffé sur un elastomère et qui présente une épaisseur de plus de 20 µm,

2. une pellicule ou une couche de polyoléfine cellulaire ayant une densité de plus de 10 kg/m$^3$ (en tant que pellicule inférieure) consistant en ou comprenant un homopolymère ou un copolymère d'éthylène,

3. une pellicule ou une couche intermédiaire conférant l'adhésivité, à base de polyéthylène basse pression et comprenant un copolymère éthylène-ester vinylique, disposée entre la pellicule ou la couche de polyoléfine moussée et la pellicule supérieure ou la couche superficielle,

caractérisée en ce que la pellicule supérieure ou la couche superficielle contenant un copolymère styrène-nitrile acrylique (ASA) greffé sur un elastomère est constituée par un mélange ou un alliage de:

1.1 un copolymère styrène-nitrile acrylique (ASA) greffé sur un elastomère, qui est greffé au moyen d'acrylates polyfonctionnels, de préférence difonctionnels, et

1.2 un polyéthylène chloré (PEC) et/ou

1.3 un copolymère caoutchouteux éthylène-propylène (EPM) et/ou

1.4 un terpolymère caoutchouteux d'éthylène, de propylène et d'un diène, de préférence un diène non conjugé (EPDM), les rapports pondéraux entre 1.1 (ASA) et 1.2 (PEC) et/ou 1.3 (EPM) et/ou 1.4 (EPDM) étant de 8:2 à 3:7, de préférence de 6:4 à 4:6, en ce que la pellicule ou la couche de polyoléfine moussée (pellicule inférieure) consiste en:

2.1 une mousse de polyéthylène à pores fermés et/ou une mousse de copolymère d'éthylène-propylène à pores fermés ou des mélanges de ces matières synthétiques ayant un poids spécifique de 30 à 700 kg/m$^3$, de préférence de 35 à 500 kg/m$^3$, et la pellicule ou la couche intermédiaire en un mélange ou un alliage de:

3.1 un mélange ou alliage contenant des groupes polaires d'un polyéthylène basse pression et d'un copolymère éthylène-ester vinylique contenant des groupes polaires, de préférence un polyéthylène basse pression (HDPE) modifié par de l'éthylène-acétate de vinyle et

3.2 un copolymère éthylène-propylène (EPM) caoutchouteux et/ou un terpolymère caoutchouteux d'éthylène, de propylène et d'un diène (EPDM).

2. Pellicule ou bande stratifiée de mousse suivant la revendication 1, caractérisée en ce que le rapport d'épaisseur entre la pellicule supérieure ou la couche superficielle et la couche intermédiaire est de 4:1 à 1:4, de préférence de 3:1 à 1:3.

3. Pellicule ou bande stratifiée de mousse suivant la revendication 1, caractérisée en ce que, dans la pellicule supérieure ou la couche superficielle, le rapport pondéral entre le polyéthylène chloré (PEC) et le terpolymère caoutchouteux d'éthylène, de propylène et d'un diène (EPDM) et/ou le copolymère éthylène-propylène (EPM) caoutchouteux est de 1:3 à 3:1, de préférence de 1:2 à 2:1.

4. Pellicule ou bande stratifiée de mousse suivant une ou plusieurs des revendications 1 à 3, caractérisée en ce que, dans la couche intermédiaire 3.1, la teneur en ester vinylique (par rapport à l'ensemble du mélange ou alliage de matières synthétiques de la couche intermédiaire), de préférence la teneur en acétate de vinyle (ou la teneur en unités d'acétate de vinyle), est de 5-20 parties en poids, de préférence 6-18 parties en poids (rapportée à 100 parties en poids du mélange ou alliage de matières synthétiques dans la couche intermédiaire et calculée en l'absence d'auxiliaires de transformation, de matières de charge ou d'additifs).

5. Pellicule ou bande stratifiée de mousse suivant une ou plusieurs des revendications 1 à 4, caractérisée en ce que la teneur en EPM et/ou en EPDM dans la couche intermédiaire est de 6-27 parties en poids, de préférence 7-24 parties en poids (rapportée à 100 parties en poids du mélange ou alliage de matières synthétiques dans la couche intermédiaire et calculée en l'absence d'auxiliaires de transformation, de matières de charge ou d'additifs).

6. Pellicule ou bande stratifiée de mousse suivant une ou plusieurs des revendications 1 à 5, caractérisée en ce que le copolymère éthylène-ester vinylique contenant des groupes polaires utilisé pour la couche intermédiaire, de préférence un copolymère éthylène-acétate de vinyle, présente une teneur en ester vinylique, de préférence une teneur en acétate de vinyle (teneur en unités d'acétate de vinyle), de 9-40% en poids, de préférence 12-30% en poids.

7. Pellicule ou bande stratifiée de mousse suivant une ou plusieurs des revendications 1 à 6, caractérisée en ce que le polyéthylène chloré (PEC) utilisé présente une teneur en chlore de 36-46% en poids.

8. Pellicule ou bande stratifiée de mousse suivant une ou plusieurs des revendications 1 à 7, caractérisée en ce que la pellicule supérieure ou la couche superficielle 1.5 contient 0,5-5% en poids, de préférence 2-4% en poids (par rapport à 100% en poids du mélange de matières synthétiques de la pellicule supérieure) d'un polycaprolactone.

9. Pellicule ou bande stratifiée de mousse suivant une ou plusieurs des revendications 1 à 8, caractérisée en ce que la mousse de polyéthylène à pores fermés et/ou la mousse de copolymère éthylène-propylène à pores fermés ou la mousse à pores fermés de mélanges de ces matières synthétiques est non réticulée et présente un poids spécifique de 300-700 kg/m$^3$, de préférence 320-500 kg/m$^3$.

10. Pellicule ou bande stratifiée de mousse suivant une ou plusieurs des revendications 1 à 9, caractérisée en ce que la mousse de polyéthylène à pores fermés réticulée suivant un procédé physique et/ou chimique connu en soi et/ou la mousse de copolymère éthylène-propylène à pores fermés réticulée présente un poids spécifique de 30-300 kg/m$^3$, de préférence 35-280 kg/m$^3$.

11. Pellicule ou bande stratifiée de mousse suivant une ou plusieurs des revendications 1 à 10, caractérisée en ce que la pellicule ou la couche intermédiaire et la pellicule supérieure ou la couche superficielle ont, ensemble, une épaisseur de 0,2-1,5 mm, de préférence 0,3-0,8 mm.

12. Pellicule ou bande stratifiée de mousse suivant une ou plusieurs des revendications 1 à 11, caractérisée en ce que le copolymère éthylène-acétate de vinyle contenant des groupes polaires mis en oeuvre présente un indice de fluidité à chaud (Mfi 190/2.16) de 1-10 g/10 min.

13. Procédé pour la production de pellicules ou bandes stratifiées de mousse suivant une ou plusieurs des revendications 1 à 12, caractérisé en ce que:

1. la pellicule supérieure ou la couche superficielle, qui consiste en un mélange ou un alliage de:

1.1 un copolymère styrène-nitrile acrylique (ASA) greffé sur un élastomère, qui est greffé au moyen d'acrylates polyfonctionnels, de préférence d'acrylates difonctionnels, et de

1.2 un polyéthylène chloré (PEC) et/ou

1.3 un copolymère caoutchouteux éthylène-propylène (EPM) et/ou

1.4 un terpolymère caoutchouteux d'éthylène, de propylène et d'un diène, de préférence un diène non conjugé (EPDM),

2. la pellicule ou la couche de polyoléfine cellulaire (pellicule inférieure) qui consiste en:

2.1 une mousse de polyéthylène à pores fermés et/ou une mousse de copolymère d'éthylène-propylène à pores fermés ou des mélanges ou alliages de ces matières synthétiques ayant un poids spécifique de 30 à 700 kg/m$^3$, de préférence 35 à 500 kg/m$^3$,

3. la pellicule ou la couche intermédiaire qui consiste en un mélange ou alliage de:

3.1 un mélange contenant des groupes polaires d'un polyéthylène basse pression et d'un copolymère éthylène-ester vinylique contenant des groupes polaires, de préférence un polyéthylène basse pression (HDPE) modifié par de l'éthylène-acétate de vinyle et de

3.2 un copolymère éthylène-propylène (EPM) caoutchouteux et/ou un terpolymère caoutchouteux d'éthylène, de propylène et d'un diène (EPDM), sont unies ou raccordées les unes aux autres sans utilisation d'adhésifs supplémentaires par pressage dans des dispositifs de pressage ou de laminage connus en soi et/ou en utilisant un procédé de coextrusion avec application de chaleur.

14. Procédé suivant la revendication 13, caractérisé en ce qu'on unit la couche supérieure qui sort d'une filière plate et la couche intermédiaire sans utiliser d'adhésifs supplémentaires à une température de la masse de 180 à 260°C, de préférence 200 à 240°C, avec une pellicule ou une bande de mousse de polyoléfine, sous une pression linéaire de 2 à 50 kp/cm en utilisant au moins une paire de cylindres, de préférence en utilisant un cylindre d'estampage ou en utilisant une presse.

15. Procédé suivant la revendication 14, caractérisé en ce que les pellicules supérieures et/ou les pellicules inférieures et/ou les pellicules intermédiaires préparées séparément et/ou à l'état de pellicules à deux couches sont unies par pressage, sans emploi d'adhésifs supplémentaires, aux autres pellicules ou à la troisième pellicule en utilisant une presse ou au moins une paire de cylindres, à une température intermédiaire de 130-240°C, de préférence 140 à 190°C.

16. Procédé suivant la revendication 15, caractérisé en ce que la couche supérieure, la couche inférieure et la couche intermédiaire sont mises en oeuvre dans un procédé de coextrusion à des températures de la masse de 180 à 260°C, de préférence 200 à 240°C, et sont produites en utilisant une filière plate.

FIG.1